# EUROPÄISCHE PATENTANMELDUNG

(11) **EP 2 527 070 A1**
(43) Veröffentlichungstag der Anmeldung: **28.11.2012**
(21) Anmeldenummer: 12168784.2
(22) Anmeldetag: 22.05.2012
(51) Int. Cl.: B23D 47/02, F16C 29/10, B25H 1/00

(54) **Formatkreissäge mit Führungsvorrichtung**

(30) Priorität: 27.05.2011 DE 202011101682 U
(71) Anmelder: Wilhelm Altendorf GmbH & Co. KG, 32429 Minden (DE)
(72) Erfinder: Altendorf, Wilfried, 32429 Minden (DE)
(74) Vertreter: Eisenführ, Speiser & Partner

(57) **Zusammenfassung**

Die Erfindung betrifft eine Formatkreissäge mit einer Linearschienenführung, mit einer Führungsschiene (12) mit einem Querschnitt, umfassend einen Schienenkopf (45) und einen sich vom Schienenkopf (45) bis zu einem Schienenfuß (46) erstreckenden Schienenhals (47), mit einem entlang der Längsrichtung der Führungsschiene (12) bewegbaren Führungsschlitten (13), der ein elastisches Klemmelement (31) zum Feststellen des Führungsschlittens (13) an der Führungsschiene (12) aufweist. Erfindungsgemäß weist das Klemmelement (31) zwei Klemmelement-Schenkel (51) mit zwei jeweils an einem Klemmelement-Schenkel (51) angeordneten, nach innen gerichteten Klemmbacken (52) auf, wobei die Klemmelement-Schenkel (51) den Schienenkopf (45) teilweise umgeben, so dass die Klemmbacken (52) jeweils gegenüberliegenden Außenflächen des Schienenhalses (47) zugewandt sind, und die Ausnehmung umgibt das Klemmelement (31) teilweise derart, dass die Außenflächen der Klemmelement-Schenkel (51) an sich zu einer Öffnung der Ausnehmung in ihrem Abstand voneinander erweiternden Innenflächen der Schenkel der U-förmigen Ausnehmung anliegen, wobei das Klemmelement (31) mit einem Stellelement (53) zusammenwirkt, welches eine Stellkraft zwischen Schlittenkörper (30) und Klemmelement (31) aufbringen kann, durch die das Klemmelement (31) an die Innenflächen gepresst wird, so dass die Klemmbacken (52) den Schienenhals einklemmen.

## Beschreibung

Die Erfindung betrifft eine Formatkreissäge, umfassend eine Werkstückauflagefläche, die an einem Maschinengestell befestigt ist, ein relativ zur Werkstückauflagefläche drehbar gelagertes Kreissägeblatt, eine Führungsvorrichtung, insbesondere Linearschienenführung, mit einer Führungsschiene mit einem Querschnitt, umfassend einen Schienenkopf und einen sich vom Schienenkopf bis zu einem Schienenfuß erstreckenden Schienenhals, der eine geringere Querschnittsbreite als der Schienenkopf aufweist, mit einem entlang der Längsrichtung der Führungsschiene bewegbaren Führungsschlitten, der einen Schlittenkörper mit einer im Querschnitt U-förmigen Ausnehmung und ein elastisches Klemmelement zum Feststellen des Führungsschlittens an der Führungsschiene aufweist.

Führungsvorrichtungen dieser Art dienen Formatkreissägen dazu, an einem feststehenden Element angeordnete Zusatzelemente linear an diesem Element entlang zu führen. Ein beispielhafter Anwendungsfall ist das lineare Führen eines Zusatztisches entlang eines Haupttisches einer Formatkreissäge, wobei die Tische Werkstückauflageflächen bilden, auf denen ein Werkstück zur Bearbeitung mittels eines sich relativ zu dem Werkstück bewegenden Kreissägeblatts aufliegt. Ein weiterer beispielhafter Anwendungsfall ist das lineare Führen eines Anschlags für ein Werkstück.

Die Bearbeitung des Werkstücks kann es dabei erforderlich machen, dass der Zusatztisch an einer Position der Führungsschiene festgestellt werden muss. Dazu weist ein entlang der Längsrichtung der Führungsschiene bewegbarer Führungsschlitten häufig ein Klemm-, Blockier- oder Bremselement zum Fixieren oder Lösen des Führungsschlittens in einer bestimmten Position der Führungsschiene auf. Klemmelemente dieser Art, welche an Linearführungsschienen geführt sind, sind für verschiedene Anwendungsbereichen bekannt. Die Klemmelemente sind häufig neben einem Führungsschlitten angebracht und wirken direkt durch Brems- oder Haltekräfte auf die Linearführungsschiene. Die bekannten Klemmelemente erfordern in der Regel zusätzlichen Bauraum. Zudem sind die Klemmelemente häufig mit separaten, federbelasteten und beweglichen Bremselementen ausgerüstet, die zu einem komplexen Aufbau des Klemmelements führen und das Klemmelement empfindlich gegenüber den in Formatkreissägen auftretenden Holzspänen machen.

Klemm- und Bremsvorrichtungen der vorgenannten Art sind beispielweise aus DE 10 2004 044 052 A1, DE 10 2005 016 719 B4, DE 10 2005 016 724 B4, DE 10 2006 019 410 B4 und DE 10 2006 062 295 B4 vorbekannt.

Der Erfindung liegt die Aufgabe zugrunde, eine Führungsvorrichtung bereitzustellen, welche einen konstruktiv einfachen Aufbau aufweist und insbesondere für die Verwendung in handbedienten Zusatztischen oder Anschlägen von Holzbearbeitungsmaschinen geeignet ist.

Diese Aufgabe wird erfindungsgemäß gelöst durch eine Formatkreissäge der eingangs genannten Art, welche sich dadurch auszeichnet, dass das Klemmelement zwei Klemmelement-Schenkel mit zwei jeweils an einem Klemmelement-Schenkel angeordneten, nach innen gerichteten Klemmbacken aufweist, die Klemmelement-Schenkel den Schienenkopf teilweise umgeben, so dass die Klemmbacken jeweils gegenüberliegenden Außenflächen des Schienenhalses zugewandt sind, und die Ausnehmung das Klemmelement teilweise derart umgibt, dass die Außenflächen der Klemmelement-Schenkel an sich zu einer Öffnung der Ausnehmung in ihrem Abstand voneinander erweiternden Innenflächen der Schenkel der U-förmigen Ausnehmung anliegen, wobei das Klemmelement mit einem Stellelement zusammenwirkt, welches eine Stellkraft zwischen Schlittenkörper und Klemmelement aufbringen kann, durch die das Klemmelement an die Innenflächen gepresst wird, so dass die Klemmbacken den Schienenhals einklemmen.

Mit der erfindungsgemäßen Führungsvorrichtung wird eine konstruktiv einfache Ausgestaltung des Klemmelements und ein schnelles und einfaches Feststellen eines Führungsschlittens ermöglicht. Dies wird erreicht durch die erfindungsgemäße Anordnung und Ausgestaltung des elastischen Klemmelements in dem Führungsschlitten, so dass separate Federelemente nicht benötigt werden. Somit wird die Anzahl beweglicher Teile gering gehalten. Die erfindungsgemäße Führungsvorrichtung ist zudem verschmutzungsunempfindlich, so dass keine Abstreifer oder Abdichtungen zum Verhindern etwaiger Verschmutzungen notwendig sind. Die Führungsvorrichtung funktioniert zudem vergleichsweise verschleißfrei und kann mit einer in Längsrichtung geringen Bautiefe ausgeführt werden. Schließlich erfordert die erfindungsgemäße Führungsvorrichtung keine Nachstellung des Klemmelements und ist somit in der Anwendung besonders wartungsarm.

Bevorzugt ist der Schlittenkörper U-förmig ausgebildet mit einer der Öffnung der Ausnehmung abgewandten Basis und zwei Schenkeln, welche sich von der Basis zur Öffnung erstrecken. Weiter bevorzugt weist das Klemmelement eine Basis auf, von der sich die Klemmelement-Schenkel in einer der Führungsschiene zugewandten Richtung erstrecken. Die Klemmbacken können bevorzugt an den Enden der Klemmelement-Schenkel angeordnet sein und weisen Bremsflächen auf, die dem Schienenhals zugewandt sind. In einer Position des Klemmelements, in der die Klemmbacken den Schienenhals einklemmen, werden die Bremsflächen gegen den Schienenhals gepresst.

Vorzugsweise ist der Führungsschlitten fest mit einem an der Formatkreissäge angeordneten Zusatztisch verbunden, so dass der Zusatztisch entlang der Führungsschiene beweglich gelagert ist. Dabei wird die Führungsvorrichtung zum Führen des Zusatztisches verwendet, wobei der Zusatztisch festgestellt und losgelöst werden kann.

Gemäß einer ersten bevorzugten Ausführungsform ist vorgesehen, dass das Stellelement als Stellschraube ausgebildet ist, die von einer der Ausnehmung abgewandten Seite des Schlittenkörpers durch den Schlittenkörper bis zur Ausnehmung hindurchragt und in eine Gewindebohrung des Klemmelements zum Feststellen und Lösen des Führungsschlittens eintaucht. Dadurch wird ein konstruktiv einfach ausgeführtes und bedienerfreundliches Stellelement angegeben, bei dem das Feststellen besonders einfach und schnell erfolgen kann. Die Stellschraube ragt bevorzugt in Richtung zur Öffnung der Ausnehmung hin durch die Basis des Schlittenkörpers hindurch und in eine Gewindebohrung in der Basis des Klemmelements hinein. Einem Bediener wird zusätzlich ein haptisches Gefühl dafür gegeben, ob das Klemmelement festgestellt ist. Der Bediener spürt durch ein erschwertes Drehen der Stellschraube, wenn die Klemmbacken in eine Feststellposition gelangen. Ein Schraubenkopf der Stellschraube kann dabei zum händischen Drehen der Stellschraube durch einen Bediener ausgestaltet sein. Alternativ kann die Stellschraube auch durch einen automatisch gesteuerten Drehmotor oder einen Exzentermechanismus verstellt werden.

Gemäß einer weiteren bevorzugten Ausführungsform ist vorgesehen, dass die Außenflächen des Klemmelements im Querschnitt V-förmig, sich in Richtung der Klemmbacken erweiternd ausgebildet sind und die Innenflächen der Ausnehmung im Querschnitt V-förmig, sich in Richtung der Öffnung der Ausnehmung erweiternd ausgebildet sind. Damit wird ein besonders zweckmäßiger Aufbau des Führungsschlittens und des Klemmelements angegeben, bei dem Hinterschneidungen, die die Funktion des Klemmelements beeinträchtigenden, vermieden werden.

Unter dem Begriff "V-förmig" ist im Rahmen der vorliegenden Erfindung zu verstehen, dass die Schenkel des Klemmelements zumindest in einem Teilbereich in Richtung zu den Klemmbacken hin V-förmig auseinanderstreben oder die Innenflächen der Ausnehmung zumindest in einem Teilbereich V-förmig auseinanderstreben. Das V-förmige Auseinanderstreben kann dabei linear, nicht-linear und/oder mit mehreren linearen Abschnitten ausgeführt sein.

Nach einer weiteren Ausführungsform weist das Klemmelement eine Vorspannung auf, welche die Klemmelement-Schenkel an die Innenflächen der Ausnehmung in eine Position presst, in der die Klemmbacken den Schienenhals nicht einklemmen, wobei in dieser Position die Innenflächen eines V-förmigen Teilbereichs der Ausnehmung einen Winkel bilden, der kleiner ist als ein durch die Außenflächen eines V-förmigen Teilbereichs der Klemmelement-Schenkel gebildeter Winkel. Dadurch wird eine vorgespannte Elastizität des Klemmelements besonders zweckmäßig genutzt. Zudem kann das Klemmelement durch die Vorspannung derart eingestellt werden, dass zum Feststellen nur ein geringer Verstellweg nötig ist. Die Vorspannung des Klemmelements bewirkt zudem, dass das Klemmelement eine Kraftkomponente aus der Ausnehmung heraus bildet. Das Stellelement kann somit allein zum Ausüben einer Stellkraft in die Ausnehmung hinein ausgeführt sein. Für das Lösen des Klemmelements ist es nicht notwendig, dass das Stellelement eine Kraftkomponente auf das Klemmelement in Richtung aus der Ausnehmung hinaus ausübt.

Eine andere bevorzugte Ausführungsform zeichnet sich dadurch aus, dass das Klemmelement einstückig aus Metall oder Kunststoff und der Schlittenkörper einstückig aus Metall gebildet sind. Damit wird eine Ausführungsform erzielt, die besonders preiswert herstellbar ist und einen konstruktiv einfachen Aufbau aufweist. Unter dem Begriff "Kunststoff" ist im Rahmen der vorliegenden Erfindung beispielsweise ein aus einem organischen Polymer gebildeter Festkörper zu verstehen.

Ein weiterer Aspekt der Erfindung ist eine Führungsvorrichtung, insbesondere Linearschienenführung, umfassend: eine Führungsschiene mit einem Querschnitt, umfassend einen Schienenkopf und einen sich vom Schienenkopf bis zu einem Schienenfuß erstreckenden Schienenhals, der eine geringere Querschnittsbreite als der Schienenkopf aufweist, einen entlang der Längsrichtung der Führungsschiene bewegbaren Führungsschlitten, der einen Schlittenkörper mit einer im Querschnitt U-förmigen Ausnehmung und ein elastisches Klemmelement zum Feststellen des Führungsschlittens an der Führungsschiene aufweist, welche sich dadurch auszeichnet, dass das Klemmelement zwei Klemmelement-Schenkel mit zwei jeweils an einem Klemmelement-Schenkel angeordneten, nach innen gerichteten Klemmbacken aufweist, die Klemmelement-Schenkel den Schienenkopf teilweise umgeben, so dass die Klemmbacken jeweils gegenüberliegenden Außenflächen des Schienenhalses zugewandt sind, und die Ausnehmung das Klemmelement teilweise derart umgibt, dass die Außenflächen der Klemmelement-Schenkel an sich zu einer Öffnung der Ausnehmung in ihrem Abstand voneinander erweiternden Innenflächen der Schenkel der U-förmigen Ausnehmung anliegen, wobei das Klemmelement mit einem Stellelement zusammenwirkt, welches eine Stellkraft zwischen Schlittenkörper und Klemmelement aufbringen kann, durch die das Klemmelement an die Innenflächen gepresst wird, so dass die Klemmbacken den Schienenhals einklemmen.

Gemäß einer bevorzugten Ausführungsform der erfindungsgemäßen Führungsvorrichtung ist vorgesehen, dass die Führungsvorrichtung nach einer vorstehend beschriebenen Bauweise ausgeführt ist.

Eine bevorzugte Ausführungsform der Erfindung wird anhand der beiliegenden Figuren erläutert. Es zeigen:
- Figur 1: eine in einer Holzbearbeitungsmaschine angeordnete Ausführungsform einer erfindungsgemäßen Führungsvorrichtung in einer Seitenansicht,
- Figur 2: eine Ansicht im Querschnitt einer in Figur 1 gezeigten Ausführungsform einer erfindungsgemäßen Führungsvorrichtung,
- Figur 3: eine vergrößerte Querschnittsansicht der in Figur 2 gezeigten Ausführungsform einer erfindungsgemäßen Führungsvorrichtung und
- Figur 4: eine vergrößerte Seitenansicht einer in einer Holzbearbeitungsmaschine angeordneten Führungsvorrichtung.

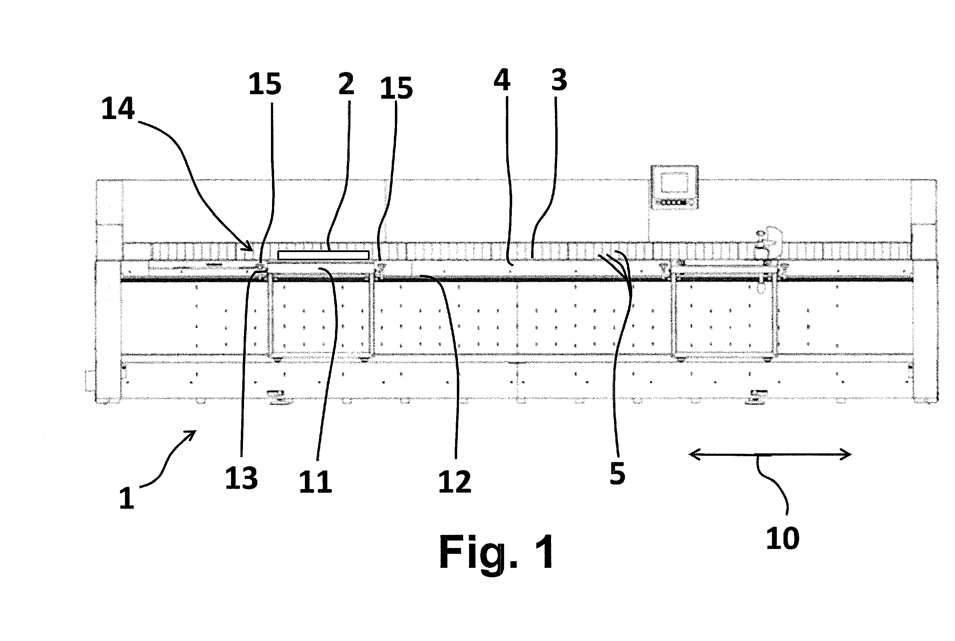

Figur 1 zeigt eine Holzbearbeitungsmaschine 1 in einer Ansicht von der Seite. Ein Werkstück 2 wird zur Bearbeitung auf eine Werkstückauflagefläche 3, die von einem Tisch 4 gebildet wird, gelegt. In einem Bearbeitungsprozess fährt ein nicht gezeigtes Kreissägeblatt unter den Schutzhaubenelementen 5 in Richtung 10 quer zur Betrachtungsrichtung an dem Tisch 4 entlang und zur Bearbeitung teilweise durch das Werkstück 2, welches in Betrachtungsrichtung unter den Schutzhaubenelementen 5 durchragt.

Das Werkstück 2 liegt teilweise auf einem Zusatztisch 11 auf, welcher entlang einer Führungsschiene 12 mittels eines fest mit dem Zusatztisch 11 verbundenen Führungsschlittens 13 parallel zur Werkstückauflagefläche 3 verschieblich gelagert ist. Die Führungsschiene 12 und der Führungsschlitten 13 bilden eine Führungsvorrichtung 14. Der Zusatztisch 11 kann mittels zweier an seinen Enden angeordneten Feststellelemente 15 in einer Position entlang des Tisches 4 festgestellt werden.

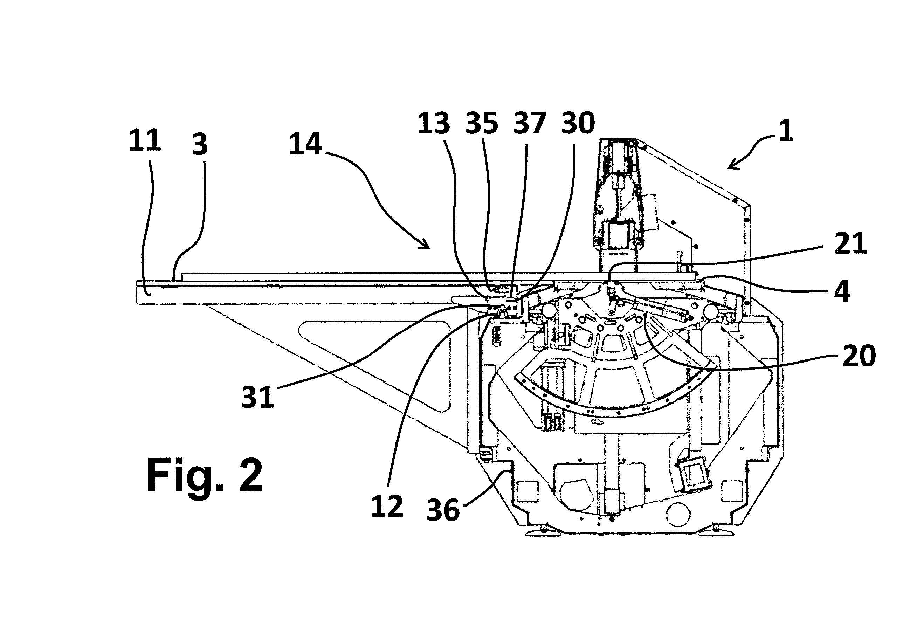

Eine Querschnittsansicht einer in Figur 1 gezeigten Führungsvorrichtung 14 ist in Figur 2 gezeigt. Gleiche oder funktionsgleiche Elemente sind dabei mit denselben Bezugszeichen versehen. Figur 2 zeigt eine Holzbearbeitungsmaschine 1 mit einem unterhalb der Werkstückauflagefläche 3 angeordneten, schwenkbaren Sägeaggregat 20, an dem ein Kreissägeblatt drehbar gelagert ist und zur Bearbeitung des Werkstücks 2 durch einen Sägeschlitz 21 ragt. Das Werkstück 2 liegt teilweise auf dem Tisch 4 und teilweise auf dem Zusatztisch 11.

Der Zusatztisch 11 ist in Betrachtungsrichtung relativ zu dem Tisch 4 mittels der Führungsvorrichtung 14 verschiebbar. Dazu weist die Führungsvorrichtung 14 eine Führungsschiene 12 und einen auf der Führungsschiene 12 gelagerten Führungsschlitten 13 auf, wobei der Führungsschlitten 13 fest mit dem Zusatztisch 11 verbunden ist.

Der Führungsschlitten 13 weist einen Schlittenkörper 30 mit einer U-förmigen Ausnehmung 32 auf, die ein elastisches, aus Kunststoff bestehendes Klemmelement 31 teilweise umgibt. Eine Stellschraube 35 ragt von einer der Ausnehmung 32 abgewandten, oberen Seite 37 des Schlittenkörpers 30 durch den Schlittenkörper 30 in eine Gewindebohrung des Klemmelements 31 hinein. Die Führungsschiene 12 ist fest auf einem Gestell 36 der Holzbearbeitungsmaschine 1 angeordnet, welches den Tisch 4 trägt.

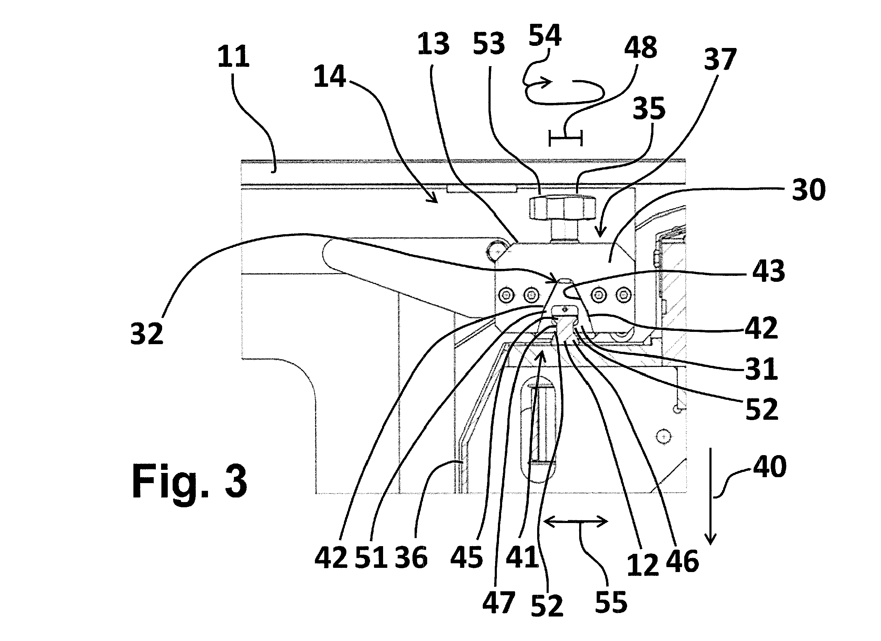

Figur 3 zeigt eine vergrößerte Querschnittsansicht der in Figur 2 gezeigten Führungsvorrichtung 14. Gleiche oder funktionsgleiche Elemente sind dabei mit denselben Bezugszeichen versehen. Figur 3 zeigt eine Führungsschiene 12, die fest auf einem Gestell 36 der in Figur 2 gezeigten Holzbearbeitungsmaschine 1 angeordnet ist. Ein Führungsschlitten 13 ist fest mit einem Zusatztisch 11 zum Führen des Zusatztisches 11 in eine Richtung parallel zur Betrachtungsrichtung verbunden. Der Führungsschlitten 13 weist einen aus Metall bestehenden Schlittenkörper 30 auf mit sich in einer Richtung 40 zu einer Öffnung 41 hin erweiternden, im Querschnitt V-förmig ausgebildeten Innenflächen 43 der Ausnehmung 32. Der Schlittenkörper 30 ist U-förmig ausgebildet mit einer der Öffnung 41 der Ausnehmung 32 abgewandten Basis und zwei Schenkeln, welche sich von der Basis zur Öffnung 41 erstrecken. Die Ausnehmung 32 umgibt teilweise ein Klemmelement 31, dessen Außenflächen 42 sich in der in Figur 3 gezeigten Feststellposition an die Innenflächen 43 der Ausnehmung 32 anpressen.

Dabei verlaufen die Innenfläche 43 der Ausnehmung 32 in einem Teilbereich ausgehend von der Basis des Schlittenkörpers 30 in Richtung der Öffnung 41 bis zu einem Knick V-förmig. Ausgehend von dem Knick verlaufen die Innenflächen 43 der Ausnehmung 32 bis zur Öffnung 41 der Ausnehmung 32 linear erweiternd und bilden einen Winkel, der kleiner ist als der durch die Innenflächen 43 im V-förmigen Teilbereich gebildete Winkel.

Die Führungsschiene 12 weist im Querschnitt einen Schienenkopf 45 und einen sich vom Schienenkopf 45 bis zu einem Schienenfuß 46 erstreckenden Schienenhals 47 auf, der eine geringere Querschnittsbreite 48 als der Schienenkopf 45 aufweist.

Das Klemmelement 31 ist V-förmig mit einer Basis und zwei Klemmelement-Schenkeln 51 ausgebildet. Die Außenflächen 42 der Klemmelement-Schenkel 51 sind in einem Teilbereich ausgehend von der Basis des Klemmelements 31 in Richtung der Öffnung 41 der Ausnehmung 32 bis zu einem Knick V-förmig ausgebildet. Ausgehend von dem Knick verlaufen die Außenflächen 42 der Klemmelement-Schenkel 51 bis zu ihren Enden linear erweiternd und bilden einen Winkel, der kleiner ist als der durch die Außenflächen 42 im V-förmigen Teilbereich der Klemmelement-Schenkel 51 gebildete Winkel.

An den Enden der Klemmelement-Schenkel 51 sind zwei nach innen gerichtete bzw. sich nach innen erstreckende Klemmbacken 52 ausgebildet sind. Die Klemmelement-Schenkel 51 umgeben den Schienenkopf 45 derart, dass die Klemmbacken 52 dem Schienenhals 47 zugewandt sind und in der in Figur 3 gezeigten Feststellposition den Schienenhals 47 einklemmen. Dazu weisen die Klemmbacken 52 jeweils parallel zu den Außenflächen des Schienenhalses 47 verlaufende und dem Schienenhals 47 zugewandte Bremsflächen auf, welche beim Einklemmen gegen den Schienenhals 47 gepresst werden.

Ein als Stellschraube 35 ausgebildetes Stellelement 53 ragt durch die Basis des Schlittenkörpers 30 von einer der Ausnehmung 32 abgewandten Seite 37 des Schlittenkörpers 30 in eine Gewindebohrung der Basis des Klemmelements 31. Zum Feststellen des Klemmelements 31 wird die Stellschraube 35 in einer Feststell-Drehrichtung 54 gedreht, so dass das Klemmelement 31 in die Ausnehmung 32 hineingezogen wird. Zum Lösen des Klemmelements 31 wird die Stellschraube 35 in einer der Drehrichtung 54 entgegengesetzte Richtung gedreht. Dabei üben die Klemmelement-Schenkel 51 aufgrund ihrer Materialelastizität eine in Richtungen 55 wirkende Spreizkraft als Vorspannung aus. Beim Lösen des Klemmelements 31 mittels der Stellschraube 35 treibt das Klemmelement 31 durch die Spreizkraft aus der Ausnehmung 32 heraus. Dadurch werden die Klemmbacken 52 von dem Schienenhals 47 gelöst und der Führungsschlitten 13 ist in Betrachtungsrichtung entlang der Führungsschiene 12 bewegbar.

In einer Position, in der die Klemmbacken 52 von dem Schienenhals 47 gelöst sind, d.h. den Schienenhals 47 nicht einklemmen, bilden die Innenflächen 43 des V-förmigen Teilbereichs der Innenflächen 43 der Ausnehmung 32 einen Winkel, der kleiner ist als ein durch die Außenflächen 42 des V-förmigen Teilbereichs der Klemmelement-Schenkel 51 gebildeter Winkel.

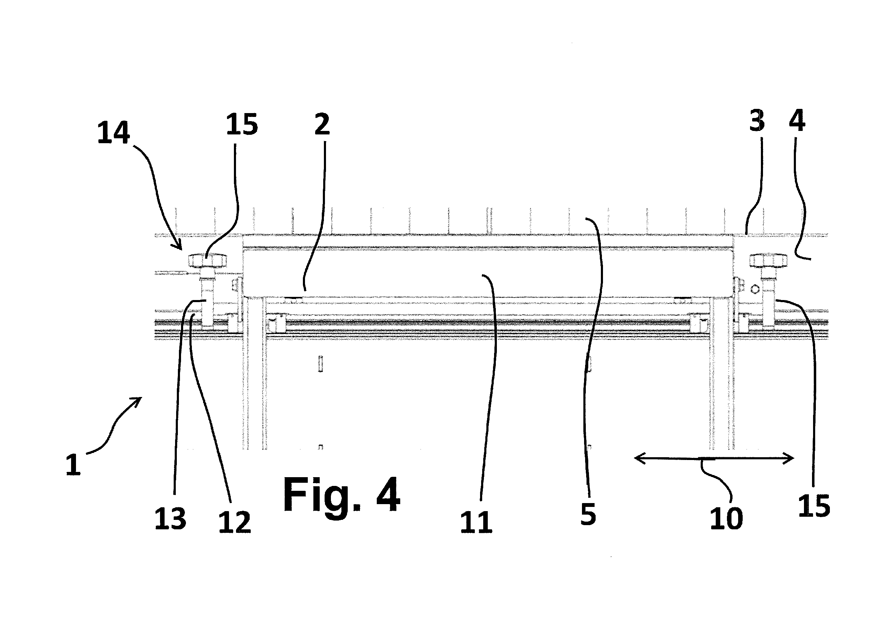

Figur 4 zeigt eine vergrößerte Seitenansicht einer in Figur 1 gezeigten Holzbearbeitungsmaschine 1. Gleiche oder funktionsgleiche Elemente sind dabei mit denselben Bezugszeichen versehen. Figur 4 zeigt eine Werkstückauflagefläche 3, die von einem Tisch 4 gebildet wird. Ein Zusatztisch 11 ist entlang einer Führungsschiene 12 mittels eines fest mit dem Zusatztisch 11 verbundenen Führungsschlittens 13 parallel zur Werkstückauflagefläche 3 verschieblich gelagert ist. Die Führungsschiene 12 und der Führungsschlitten 13 bilden eine Führungsvorrichtung 14. Der Zusatztisch 11 kann mittels zweier an seinen Enden angeordneten Feststellelemente 15 in einer Position entlang des Tisches 4 festgestellt werden.

## Patentansprüche

1. Formatkreissäge, umfassend:
- eine Werkstückauflagefläche, die an einem Maschinengestell (36) befestigt ist,
- ein relativ zur Werkstückauflagefläche drehbar gelagertes Kreissägeblatt,
- eine Führungsvorrichtung, insbesondere Linearschienenführung,
o mit einer Führungsschiene (12) mit einem Querschnitt, umfassend einen Schienenkopf und einen sich vom Schienenkopf (45) bis zu einem Schienenfuß (46) erstreckenden Schienenhals (47), der eine geringere Querschnittsbreite (48) als der Schienenkopf (45) aufweist,
o mit einem entlang der Längsrichtung der Führungsschiene (12) bewegbaren Führungsschlitten (13), der einen Schlittenkörper (30) mit einer im Querschnitt U-förmigen Ausnehmung (32) und ein elastisches Klemmelement (31) zum Feststellen des Führungsschlittens (13) an der Führungsschiene (12) aufweist,
**dadurch gekennzeichnet, dass**
- das Klemmelement (31) zwei Klemmelement-Schenkel (51) mit zwei jeweils an einem Klemmelement-Schenkel (51) angeordneten, nach innen gerichteten Klemmbacken (52) aufweist,
- die Klemmelement-Schenkel (51) den Schienenkopf (45) teilweise umgeben, so dass die Klemmbacken (52) jeweils gegenüberliegenden Außenflächen des Schienenhalses (47) zugewandt sind, und
- die Ausnehmung (32) das Klemmelement (31) teilweise derart umgibt, dass die Außenflächen (42) der Klemmelement-Schenkel (51) an sich zu einer Öffnung (41) der Ausnehmung (42) in ihrem Abstand voneinander erweiternden Innenflächen (43) der Schenkel der U-förmigen Ausnehmung (32) anliegen,
- wobei das Klemmelement (31) mit einem Stellelement (53) zusammenwirkt, welches eine Stellkraft zwischen Schlittenkörper (30) und Klemmelement (31) aufbringen kann, durch die das Klemmelement (31) an die Innenflächen (43) gepresst wird, so dass die Klemmbacken (52) den Schienenhals (47) einklemmen.

2. Formatkreissäge nach Anspruch 1,
**dadurch gekennzeichnet, dass**
- das Stellelement (53) als Stellschraube (35) ausgebildet ist, die von einer der Ausnehmung (32) abgewandten Seite des Schlittenkörpers (30) durch den Schlittenkörper (30) bis zur Ausnehmung (32) hindurchragt und in eine Gewindebohrung des Klemmelements (31) zum Feststellen und Lösen des Führungsschlittens (13) eintaucht.

3. Formatkreissäge nach einem der vorstehenden Ansprüche,
**dadurch gekennzeichnet, dass**
- das die Außenflächen des Klemmelements (31) im Querschnitt V-förmig, sich in Richtung der Klemmbacken (52) erweiternd ausgebildet sind und
- die Innenflächen der Ausnehmung (32) im Querschnitt V-förmig, sich in Richtung der Öffnung (41) der Ausnehmung (32) erweiternd ausgebildet sind.

4. Formatkreissäge nach Anspruch 3,
**dadurch gekennzeichnet, dass**
- das Klemmelement (31) eine Vorspannung aufweist, welche die Klemmelement-Schenkel (51) an die Innenflächen (43) der Ausnehmung (32) in eine Position presst, in der die Klemmbacken (52) den Schienenhals (47) nicht einklemmen,
- wobei in dieser Position die Innenflächen (43) eines V-förmigen Teilbereichs der Ausnehmung (32) einen Winkel bilden, der kleiner ist als ein durch die Außenflächen (42) eines V-förmigen Teilbereichs der Klemmelement-Schenkel (51) gebildeter Winkel.

5. Formatkreissäge nach einem der vorstehenden Ansprüche,
**dadurch gekennzeichnet, dass**
- das Klemmelement (31) einstückig aus Metall oder Kunststoff und
- der Schlittenkörper (30) einstückig aus Metall gebildet sind.

6. Führungsvorrichtung, insbesondere Linearschienenführung, umfassend:
- eine Führungsschiene (12) mit einem Querschnitt, umfassend einen Schienenkopf und einen sich vom Schienenkopf (45) bis zu einem Schienenfuß (46) erstreckenden Schienenhals (47), der eine geringere Querschnittsbreite (48) als der Schienenkopf (45) aufweist,
- einen entlang der Längsrichtung der Führungsschiene (12) bewegbaren Führungsschlitten (13), der einen Schlittenkörper (30) mit einer im Querschnitt U-förmigen Ausnehmung (32) und ein elastisches Klemmelement (31) zum Feststellen des Führungsschlittens (13) an der Führungsschiene (12) aufweist,
**dadurch gekennzeichnet, dass**
- das Klemmelement (31) zwei Klemmelement-Schenkel (51) mit zwei jeweils an einem Klemmelement-Schenkel (51) angeordneten, nach innen gerichteten Klemmbacken (52) aufweist,
- die Klemmelement-Schenkel (51) den Schienenkopf (45) teilweise umgeben, so dass die Klemmbacken (52) jeweils gegenüberliegenden Außenflächen des Schienenhalses (47) zugewandt sind, und
- die Ausnehmung (32) das Klemmelement (31) teilweise derart umgibt, dass die Außenflächen (42) der Klemmelement-Schenkel (51) an sich zu einer Öffnung (41) der Ausnehmung (42) in ihrem Abstand voneinander erweiternden Innenflächen (43) der Schenkel der U-förmigen Ausnehmung (32) anliegen,
- wobei das Klemmelement (31) mit einem Stellelement (53) zusammenwirkt, welches eine Stellkraft zwischen Schlittenkörper (30) und Klemmelement (31) aufbringen kann, durch die das Klemmelement (31) an die Innenflächen (43) gepresst wird, so dass die Klemmbacken (52) den Schienenhals (47) einklemmen.

7. Führungsvorrichtung nach Anspruch 6,
**dadurch gekennzeichnet, dass**
die Führungsvorrichtung ausgeführt ist nach einer Führungsvorrichtung nach einem der Ansprüche 2 bis 5.
